# EUROPEAN PATENT SPECIFICATION

(11) **EP 3 963 223 B1**
(45) Date of publication and mention of the grant of the patent: **15.04.2026**
(21) Application number: 20726305.4
(22) Date of filing: 01.05.2020
(51) Int. Cl.: F16D 1/072, F16D 1/08

(54) **ARRANGEMENT FOR CONNECTING TWO COMPONENTS WITH A SERRATED CONNECTOR MEMBER**
ANORDNUNG ZUM VERBINDEN ZWEIER KOMPONENTEN MIT EINEM GERÄNDELTEN VERBINDUNGSELEMENT
ENSEMBLE POUR L'ACCOUPLEMENT DE DEUX COMPOSANTS AVEC UN ÉLÉMENT DE CONNEXION MOLETÉ

(30) Priority: 03.05.2019 GB 201906321
(43) Date of publication of application: 09.03.2022
(73) Proprietor: Polar Technology Management Group Limited, Banbury, Oxfordshire OX16 9BE (GB)
(72) Inventor: DEWHIRST, Michael, Oxfordshire OX29 4TL (GB); LEWIS, Paul, Oxfordshire OX29 4TL (GB)
(74) Representative: Bazant-Hegemark, Florian
(86) International application number: PCT/EP2020/062218
(87) International publication number: WO 2020/225162

(56) References cited:
- CN-A- 104 196 901
- DE-A1- 102016 003 139
- DE-A1- 102018 003 823
- DE-A1- 3 330 330
- DE-A1- 4 111 286
- FR-A1- 2 706 564
- GB-A- 1 094 610
- US-A- 3 399 910
- US-A1- 2010 013 351
- US-A1- 2017 227 059

## Description

This invention relates to a connector arrangement whereby a shaft of a lightweight material such as a composite material or a plastics material can be connected to another component of, for example, a composite or plastics material.

Composite materials are in increasingly widespread use in a number of applications. By way of example, they are increasingly being used in a number of aerospace and automotive applications as an alternative to the use of metallic materials. In such applications, the use of composite materials is advantageous as they allow considerable weight savings to be made whilst maintaining component strength at an acceptable level. By way of example, they have found application in a number of designs of drive shaft, fuel pipe, suspension components and the like.

Whilst the use of composite materials has advantages in a number of applications, one disadvantage of the use of composite materials is that the connection of other components thereto is difficult. By way of example, the formation of openings in a composite material shaft may weaken the shaft to such an extent that its load transmitting properties are negatively impacted. As a consequence of this, bolting or screwing fittings to an end of a shaft is undesirable.

If two components of composite materials are to be interconnected in a load transmitting manner, this disadvantage may be exacerbated. Rather than drill or form openings in a composite material shaft in such an application, a suitable adhesive or the like may be used to bond the two components to one another. However, the use of a bonded connection may be undesirable in a number of applications.

Similar disadvantages may apply where components of other lightweight materials are to be interconnected, for example, thermoset or thermoplastic materials.

It is an object of the invention to provide a connector arrangement whereby a first component can readily be connected to a second component in a load transmitting manner.

According to the present invention there is provided a connector arrangement as defined in claim 1, for interconnecting a first component and a second component, the connector arrangement comprising a connector member including a first abutment face shaped to cooperate with a face of the first component, the first abutment face being provided with a series of spline teeth formations, the dimensions of the first abutment face being selected relative to the first component such that the spline teeth formations thereof dig into the material thereof, the connector member further comprising a second abutment face shaped to cooperate with a face of the second component, the second abutment face also being provided with a series of spline teeth formations, the dimensions of the second abutment face being selected relative to the second component such that the spline teeth formations thereof dig into the material of the second component.

The first component may be of a composite material including reinforcing fibres, or may comprise a thermoset or thermoplastic material, for example. Where of a composite material, it may take a range of forms including, for example, filament wound materials, stitched preforms, braided or tape based reinforced materials or short fibre filled materials. Alternative materials include those capable of 3D printing and injection moulding. Similarly, the second component may be of these materials. The first and second components may be of the same material. However, this need not be the case and the invention may be used in the connection of components of dissimilar materials or of different physical properties or characteristics.

The first component preferably takes the form of a shaft or rod. The first abutment face may be arranged to abut part of the outer surface of the first component. Alternatively, where the first component comprises a hollow shaft, the first abutment face may be arranged to abut part of the inner surface of the first component.

The second component may comprise a flange component arranged to encircle part of the first component. By way of example, it may comprise a fitting provided with openings to allow the first component to be bolted or otherwise secured to another device or component. The second abutment face may be arranged to abut an inner peripheral surface of the second component.

Alternatively, the second component may comprise a toothed gear or the like.

In a further alternative, the second component may comprise a hollow shaft, the second abutment face being arranged to cooperate with the outer or inner peripheral surface of the second component.

The first and second abutment faces may be axially aligned with one another, or may be displaced, axially, from one another. They may comprise, respectively, the inner and outer faces of a tubular component, or may be respective parts of, for example, the outer face of a component.

The spline teeth formations of the first and second abutment faces are preferably of small height. By way of example, they may be of radial height less than 0.5mm, and are preferably of radial height less than 0.25mm. Such formations are sometime referred to as microsplines.

Where the loads to be transmitted between the first and second components are torsional loads, the spline teeth formations are preferably in the form of generally axially extending teeth, and assembly is achieved by press fitting. Where the loads to be transmitted between the first and second components are tensional loads, the spline teeth formations are preferably of helical form, the assembly operation involving relative rotation between the connector member and the first and second components such that the assembly is 'screwed' together.

It will be appreciated that the invention provides a simple and convenient technique for securing together a pair of components, for example components of lightweight materials such as composite materials or plastics materials.

The invention will further be described, by way of example, with reference to the accompanying drawings, in which:
Figure 1 is a diagrammatic sectional view illustrating a connector arrangement in accordance with an embodiment of the invention;
Figures 2 and 3 are views illustrating part of the embodiment of Figure 1; and
Figures 4 to 6 illustrate some alternative embodiments.

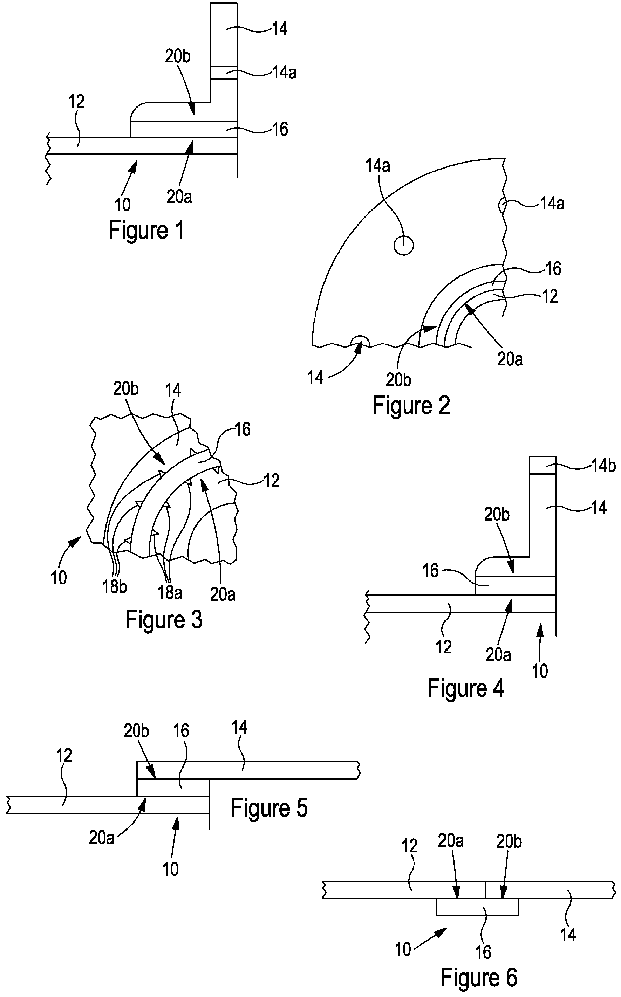

Referring firstly to Figures 1 to 3, a connector arrangement 10 is illustrated for use in interconnecting a first component 12 and a second component 14. In this embodiment, the first component 12 takes the form of a hollow tubular shaft of a fibre reinforced composite material such as a filament wound composite material, and the second component 14 takes the form of a flange component of a composite material made up of stitched preforms. It will be appreciated that whilst this embodiment is of these materials, the invention is not restricted to use with first and second components 12, 14 of these materials, and is also applicable to the connection of first and second components 12, 14 of, for example, other types of composite material, injection moulded plastics materials, components manufactured by 3D printing, and a range of other forms.

Encircling part of the first component 12 is a connector member 16 of a metallic material. The connector member 16, in this embodiment, takes the form of a short length of a metallic tube, the inner and outer surfaces of which are each provided with respective series of small, generally axially extending spline teeth formations 18a, 18b. The spline teeth formations 18a, 18b are of a small radial height. By way of example, they may be of radial height less than 0.5mm, and are preferably smaller than this in radial height. For example, they may be of radial height less than 0.25mm. As noted hereinbefore, such spline formations are sometimes referred to as microsplines as a result of their being of small radial height.

The connector member 16 thus includes a first, inner abutment face 20a provided with spline teeth formations 18a which faces towards and abuts, in use, part of the outer face of the first component 12. The connector member 16 is secured to the first component 12 by being press fitted thereto.

The second component 14 includes an inner peripheral surface which, in use, faces towards and abuts a second, outer abutment face 20b of the connector member 16 provided with spline teeth formations 18b. As with the assembly of the connector member 16 to the first component 12, the second component 14 and the connector member 16 are conveniently assembled by press fitting.

During the press fitting assembly processes, the spline teeth formations 18a, 18b dig into the corresponding surfaces of the first and second components 12, 14, the combination of the fit of the connector member 16 with the first and second components 12, 14 and the engagement of the spline teeth formations 18a, 18b with the first and second components 12, 14 resulting in the formation of a good torsional load bearing connection between the first and second components.

The second component 14 is conveniently provided with a series of openings 14a or other suitable formations to allow connection of the second component 14 to other components or devices.

The invention thus allows load bearing connections to be made between a pair of components of lightweight materials such as plastics materials and composite materials in a simple and convenient manner. As the first and second components 12, 14 need not be of the same material, but rather may be of dissimilar materials, it will be appreciated that the components 12, 14 may be of materials whose characteristics are best suited to the types of loads to be borne thereby or functions to be performed thereby. By way of example, the first component 12 may be of a material of good stiffness whereas the second component 14 may be of greater flexibility.

Although in the arrangement shown in Figures 1 to 3 the second component 14 is fitted adjacent an end of the first component 12, it could be mounted at a location spaced from the end of the first component 12.

In the arrangement of Figures 1 to 3, the second component 14 takes the form of a flange component. However, it could take other forms. By way of example, it could comprise a gear (for example as shown in Figure 4) including a series of gear teeth 14b, for example on an element carried thereby or formed integrally therewith, or another hollow tubular shaft of a larger diameter than the first component (as shown in Figure 5). Another possibility is shown in Figure 6 in which the first and second components 12, 14 both take the form of hollow tubular shafts of substantially the same diameter as one another, the first and second abutment faces 20a, 20b of the connector member 16 both bearing against the inner faces of the first and second tubular members 12, 14, or both bearing against the outer faces of the first and second tubular members 12, 14.

In the arrangements described hereinbefore the spline teeth formations 18a, 18b take the form of generally axially extending spline teeth. It will be appreciated that such formations are advantageous where the loads to be transmitted are torsional loads. However, other spline formations are possible. By way of example, they may be of generally helical form, formations of this type being better suited to the transmission of tensional loads. Where generally helical spline teeth formations are provided, the assembly process should preferably be modified to introduce relative rotation between the connector member 16 and the first and second components 12, 14 during press fitting so that the connector member 16 and first and second components 12, 14 are effectively 'screwed' together.

Whilst the description hereinbefore is of specific embodiments of the invention, it will be appreciated that a wide range of modifications and alterations may be made thereto without departing from the scope of the invention as defined by the appended claims.

## Claims

1. A connector arrangement (10) comprising a first component (12) and a second component (14), wherein at least one of the first component (12) and the second component (14) is of a composite material including reinforcing fibres, the connector arrangement (10) further comprising a connector member (16) being a tubular component including a first, inner, abutment face (20a) shaped to cooperate with and abut part of an outer surface of the first component (12), the connector member (16) further comprising a second, outer, abutment face (20b) shaped to cooperate with and abut an inner peripheral surface of the second component (14), wherein the first abutment face (20a) and the second abutment face (20b) are provided with a series of spline teeth formations (18a, 18b), wherein the dimensions of the first abutment face (20a) are selected relative to the first component (12) such that the spline teeth formations (18a) thereof dig into the material of the first component (12), and wherein the dimensions of the second abutment face (20b) are selected relative to the second component (14) such that the spline teeth formations (18b) thereof dig into the material of the second component (14), **characterised in that** the spline teeth formations (18a, 18b) of the first and second abutment faces (20a, 20b) are of radial height less than 0.5mm.

2. An arrangement according to Claim 1, wherein the first component (12) is of a composite material including reinforcing fibres.

3. An arrangement according to Claim 1, wherein the first component (12) is of a thermoset or thermoplastic material.

4. An arrangement according to any of the preceding claims, wherein the second component (14) is of a composite material including reinforcing fibres.

5. An arrangement according to any of Claims 1 to 3, wherein the second component (14) is of a thermoset or thermoplastic material.

6. An arrangement according to any of the preceding claims, wherein the first and second components (12, 14) are of the same material.

7. An arrangement according to any of Claims 1 to 5, wherein the first and second components (12, 14) are of dissimilar materials.

8. An arrangement according to any of the preceding claims, wherein the first component (12) takes the form of a shaft or rod.

9. An arrangement according to any of the preceding claims, wherein the second component (14) comprises a flange component arranged to encircle part of the first component (12), a toothed gear (14b), or a hollow shaft.

10. An arrangement according to any of the preceding claims, wherein the first and second abutment faces (20a, 20b) are axially aligned with one another, comprising, respectively, the inner and outer faces of the tubular component.

11. An arrangement according to any of the preceding claims, wherein the first and second abutment faces (20a, 20b) are displaced, axially, from one another.

12. An arrangement according to any of the preceding claims, wherein the spline teeth formations (18a, 18b) of the first and second abutment faces (20a, 20b) are of radial height less than 0.25mm.

13. An arrangement according to any of the preceding claims, wherein the spline teeth formations (18a, 18b) are in the form of generally axially extending teeth.

14. An arrangement according to any of Claims 1 to 12, wherein the spline teeth formations (18a, 18b) are of generally helical form.

15. An arrangement according to any one of the preceding claims, wherein the connector member (16) takes the form of a metallic tube.

## Patentansprüche

1. Verbinderanordnung (10), umfassend
eine erste Komponente (12) und eine zweite Komponente (14), wobei mindestens eine von der ersten Komponente (12) und der zweiten Komponente (14) aus einem Verbundmaterial beinhaltend Verstärkungsfasern besteht, wobei die Verbinderanordnung (10) ferner ein Verbindungselement (16) umfasst, das eine rohrförmige Komponente ist, die eine erste, innere Anlagefläche (20a) beinhaltet, die so geformt ist, dass sie mit einem Teil einer Außenfläche der ersten Komponente (12) zusammenwirkt und daran anliegt, wobei das Verbindungselement (16) ferner eine zweite, äußere Anlagefläche (20b) umfasst, die so geformt ist, dass sie mit einer Innenumfangsfläche der zweiten Komponente (14) zusammenwirkt und daran anliegt, wobei die erste Anlagefläche (20a) und die zweite Anlagefläche (20b) mit einer Reihe von Keilverzahnungsfomationen (18a, 18b) bereitgestellt sind, wobei die Abmessungen der ersten Anlagefläche (20a) relativ zu der ersten Komponente (12) gewählt sind, sodass sich die Keilverzahnungsformationen (18a) davon in das Material der ersten Komponente (12) eingraben, und wobei die Abmessungen der zweiten Anlagefläche (20b) relativ zu der zweiten Komponente (14) gewählt sind, sodass sich die Keilverzahnungsformationen (18b) davon in das Material der zweiten Komponente (14) eingraben, **dadurch gekennzeichnet, dass** die Keilverzahnungsformationen (18a, 18b) der ersten und der zweiten Anlagefläche (20a, 20b) eine radiale Höhe von weniger als 0,5 mm haben.

2. Anordnung nach Anspruch 1, wobei die erste Komponente (12) aus einem Verbundmaterial beinhaltend Verstärkungsfasern besteht.

3. Anordnung nach Anspruch 1, wobei die erste Komponente (12) aus einem duroplastischen oder thermoplastischen Material besteht.

4. Anordnung nach einem der vorhergehenden Ansprüche, wobei die zweite Komponente (14) aus einem Verbundmaterial beinhaltend Verstärkungsfasern besteht.

5. Anordnung nach einem der Ansprüche 1 bis 3, wobei die zweite Komponente (14) aus einem duroplastischen oder thermoplastischen Material besteht.

6. Anordnung nach einem der vorhergehenden Ansprüche, wobei die erste und die zweite Komponente (12, 14) aus dem gleichen Material bestehen.

7. Anordnung nach einem der Ansprüche 1 bis 5, wobei die erste und die zweite Komponente (12, 14) aus unähnlichen Materialien sind.

8. Anordnung nach einem der vorhergehenden Ansprüche, wobei die erste Komponente (12) die Form einer Welle oder einer Stange annimmt.

9. Anordnung nach einem der vorhergehenden Ansprüche, wobei die zweite Komponente (14) eine Flanschkomponente, die angeordnet ist, um einen Teil der ersten Komponente (12) zu umgeben, ein Zahnrad (14b) oder eine Hohlwelle umfasst.

10. Anordnung nach einem der vorhergehenden Ansprüche, wobei die erste und die zweite Anlagefläche (20a, 20b) axial aufeinander ausgerichtet sind und jeweils die Innen- und die Außenfläche der rohrförmigen Komponente umfassen.

11. Anordnung nach einem der vorhergehenden Ansprüche, wobei die erste und die zweite Anlagefläche (20a, 20b) axial voneinander versetzt sind.

12. Anordnung nach einem der vorhergehenden Ansprüche, wobei die Keilverzahnungsformationen (18a, 18b) der ersten und der zweiten Anlagefläche (20a, 20b) eine radiale Höhe von weniger als 0,25 mm haben.

13. Anordnung nach einem der vorhergehenden Ansprüche, wobei die Keilverzahnungsformationen (18a, 18b) die Form von sich im Allgemeinen axial erstreckenden Zähnen haben.

14. Anordnung nach einem der Ansprüche 1 bis 12, wobei die Keilverzahnungsformationen (18a, 18b) eine im Allgemeinen schraubenlinienförmige Form haben.

15. Anordnung nach einem der vorhergehenden Ansprüche, wobei das Verbindungselement (16) die Form eines Metallrohrs annimmt.

## Revendications

1. Ensemble raccord (10) comprenant un premier composant (12) et un second composant (14), dans lequel au moins l'un du premier composant (12) et du second composant (14) est constitué d'un matériau composite comprenant des fibres de renforcement, l'ensemble raccord (10) comprenant en outre un élément de raccord (16) étant un composant tubulaire comprenant une première face de butée intérieure (20a) formée pour coopérer avec une partie d'une surface extérieure du premier composant (12) et buter contre celle-ci, l'élément de raccord (16) comprenant en outre une seconde face de butée extérieure (20b) formée pour coopérer avec une surface périphérique intérieure du second composant (14) et buter contre celle-ci, dans lequel la première face de butée (20a) et la seconde face de butée (20b) sont pourvues d'une série de formations de dents cannelées (18a, 18b), dans lequel les dimensions de la première face de butée (20a) sont sélectionnées par rapport au premier composant (12) de sorte que les formations de dents cannelées (18a) de celle-ci creusent dans le matériau du premier composant (12), et dans lequel les dimensions de la seconde face de butée (20b) sont sélectionnées par rapport au second composant (14) de sorte que les formations de dents cannelées (18b) de celle-ci creusent dans le matériau du second composant (14), **caractérisé en ce que** les formations de dents cannelées (18a, 18b) des première et seconde faces de butée (20a, 20b) présentent une hauteur radiale inférieure à 0,5 mm.

2. Ensemble selon la revendication 1, dans lequel le premier composant (12) est constitué d'un matériau composite comprenant des fibres de renforcement.

3. Ensemble selon la revendication 1, dans lequel le premier composant (12) est constitué d'un matériau thermodurcissable ou thermoplastique.

4. Ensemble selon l'une quelconque des revendications précédentes, dans lequel le second composant (14) est constitué d'un matériau composite comprenant des fibres de renforcement.

5. Ensemble selon l'une quelconque des revendications 1 à 3, dans lequel le second composant (14) est constitué d'un matériau thermodurcissable ou thermoplastique.

6. Ensemble selon l'une quelconque des revendications précédentes, dans lequel les premier et second composants (12, 14) sont constitués du même matériau.

7. Ensemble selon l'une quelconque des revendications 1 à 5, dans lequel les premier et second composants (12, 14) sont constitués de matériaux dissemblables.

8. Ensemble selon l'une quelconque des revendications précédentes, dans lequel le premier composant (12) prend la forme d'un arbre ou d'une tige.

9. Ensemble selon l'une quelconque des revendications précédentes, dans lequel le second composant (14) comprend un composant de bride agencé pour entourer une partie du premier composant (12), un engrenage denté (14b) ou un arbre creux.

10. Ensemble selon l'une quelconque des revendications précédentes, dans lequel les première et seconde faces de butée (20a, 20b) sont alignées axialement l'une avec l'autre, comprenant, respectivement, les faces interne et externe du composant tubulaire.

11. Ensemble selon l'une quelconque des revendications précédentes, dans lequel les première et seconde faces de butée (20a, 20b) sont déplacées, axialement, l'une de l'autre.

12. Ensemble selon l'une quelconque des revendications précédentes, dans lequel les formations de dents cannelées (18a, 18b) des première et seconde faces de butée (20a, 20b) présentent une hauteur radiale inférieure à 0,25 mm.

13. Ensemble selon l'une quelconque des revendications précédentes, dans lequel les formations de dents cannelées (18a, 18b) se présentent sous la forme de dents s'étendant généralement axialement.

14. Ensemble selon l'une quelconque des revendications 1 à 12, dans lequel les formations de dents cannelées (18a, 18b) sont de forme généralement hélicoïdale.

15. Ensemble selon l'une quelconque des revendications précédentes, dans lequel l'élément de raccord (16) prend la forme d'un tube métallique.
